# EUROPEAN PATENT APPLICATION

(11) **EP 4 509 256 A1**
(43) Date of publication of application: **19.02.2025**
(21) Application number: 23192164.4
(22) Date of filing: 18.08.2023
(51) Int. Cl.: B23K 20/10, B29C 65/08, B29C 65/64, B29C 65/78, B23K 101/38, B23K 101/40, B23K 101/42, B23K 103/00

(54) **ULTRASONIC JOINING ARRANGEMENT AND METHOD**

(71) Applicant: Infineon Technologies AG, 85579 Neubiberg (DE); Hesse GmbH, 33100 Paderborn (DE)
(72) Inventor: STROTMANN, Guido, 59609 Anröchte (DE); BROEKELMANN, Michael, 33129 Delbrueck (DE); DREPS, Florian, 33106 Paderborn (DE); HUNSTIG, Matthias, 33104 Paderborn (DE); NEDDERMANN, Till, 59872 Meschede (DE); SCHAERMANN, Waldemar, 33189 Schlangen (DE); TROESTER, Tobias, 33098 Paderborn (DE); WALTHER, Frank, 33100 Paderborn (DE)
(74) Representative: Westphal, Mussgnug & Partner, Patentanwälte mbB

(57) **Abstract**

An ultrasonic joining arrangement comprises a first joining tool (40), the first joining tool (40) comprising a sonotrode (42), a transducer (43), and a suction device (410), wherein the transducer (43) is coupled to the sonotrode (42) and configured to vibrate the sonotrode (42), the sonotrode (42) comprises a channel (44) extending through the inside of the sonotrode (42), and having at least two openings (45) towards the outside of the sonotrode (42), and the suction device (410) is coupled to a first one of the at least two openings (45) and is configured to cause a second joining partner (20) to be sucked towards a second one of the at least two openings (45).

## Description

### TECHNICAL FIELD

This disclosure in general relates to an ultrasonic joining arrangement and method.

### BACKGROUND

Ultrasonic joining techniques, e.g., ultrasonic welding or bonding, are widely employed to mechanically connect two joining partners. Thereby, a joining tool oscillating at an ultrasonic frequency mechanically presses a second joining partner with a pressing force against a first joining partner. For example, the first joining partner may be a semiconductor substrate or an electronic circuit board and the second joining partner may be a contact pin or any kind of connection element that allows to electrically contact the substrate or circuit board. For some applications, a plurality of second joining partners are connected to the same first joining partner. The different second joining partners may be connected to the first joining partner successively, using the same joining equipment. Generally, it is required to create reliable mechanical and electrical connections between two (or more) joining partners. In this respect, it is generally essential that the second joining partners be exactly positioned in their desired positions on the first joining partner. Positioning tools that are used to position second joining partners on a first joining partner generally require a significant amount of space before and possibly also during the joining process which is performed by means of a joining tool.

Hence, there is a need for an apparatus and a method which allow the creation of reliable connections between joining partners, while being very effective and requiring only little space.

### SUMMARY

One aspect relates to an ultrasonic joining arrangement. The ultrasonic joining arrangement includes a first joining tool, the first joining tool including a sonotrode, a transducer, and a suction device, wherein the transducer is coupled to the sonotrode and configured to vibrate the sonotrode, the sonotrode includes a channel extending through the inside of the sonotrode, and having at least two openings towards the outside of the sonotrode, and the suction device is coupled to a first one of the at least two openings and is configured to cause a second joining partner to be sucked towards a second one of the at least two openings.

Another aspect relates to a method for joining at least two joining partners by means of an ultrasonic joining arrangement. The method includes picking up a second joining partner by sucking it towards the second one of the at least two openings, placing the second joining partner on a first joining partner arranged on a support surface of a second joining tool, and performing an ultrasonic joining operation by vibrating the sonotrode to connect the second joining partner to the first joining partner.

The invention may be better understood with reference to the following drawings and the description. The components in the figures are not necessarily to scale, emphasis instead being placed upon illustrating the principles of the invention. Moreover, in the figures, like referenced numerals designate corresponding parts throughout the different views.

### BRIEF DESCRIPTION OF THE DRAWINGS

Figure 1 schematically illustrates an ultrasonic joining arrangement for forming a connection between two joining partners.
Figure 2, including Figures 2A and 2B, schematically illustrates ultrasonic joining arrangements according to further embodiments of the disclosure.
Figure 3 schematically illustrates an ultrasonic joining arrangement according to even further embodiments of the disclosure.
Figure 4, including Figures 4A to 4D, schematically illustrates ultrasonic joining arrangements according to even further embodiments of the disclosure.
Figure 5, including Figures 5A and 5B, schematically illustrates ultrasonic joining arrangements according to even further embodiments of the disclosure.
Figure 6 schematically illustrates an ultrasonic joining arrangement according to an even further embodiment of the disclosure.
Figure 7 schematically illustrates an ultrasonic joining arrangement according to an even further embodiment of the disclosure.
Figure 8 schematically illustrates an ultrasonic joining arrangement according to an even further embodiment of the disclosure.
Figure 9 schematically illustrates an ultrasonic joining arrangement according to an even further embodiment of the disclosure.
Figure 10 schematically illustrates an exemplary mode of vibration of an ultrasonic joining arrangement according to embodiments of the disclosure.

### DETAILED DESCRIPTION

In the following detailed description, reference is made to the accompanying drawings. The drawings show specific examples in which the invention may be practiced. It is to be understood that the features and principles described with respect to the various examples may be combined with each other, unless specifically noted otherwise. In the description as well as in the claims, designations of certain elements as "first element", "second element", "third element" etc. are not to be understood as enumerative. Instead, such designations serve solely to address different "elements". That is, e.g., the existence of a "third element" does not require the existence of a "first element" and a "second element".

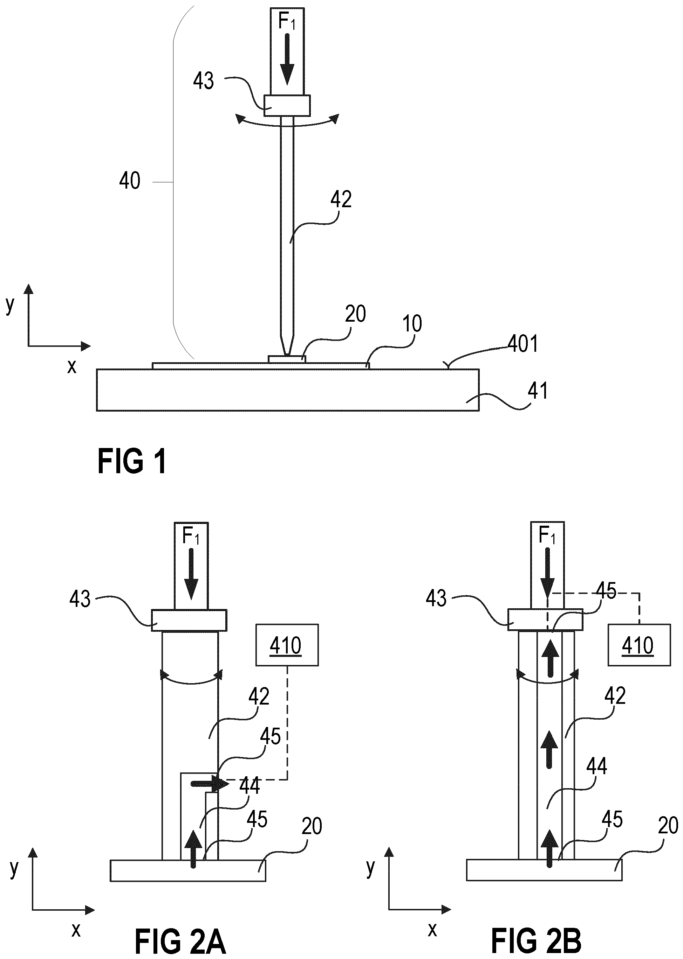

Fig. 1 schematically illustrates a joining arrangement according to one example. The joining arrangement includes a first joining tool 40 and a second joining tool 41. The second joining tool 41 may be or may comprise an anvil, for example, and comprises a support surface 401. A first joining partner 10 and a second joining partner 20 may be stacked onto each other and may be arranged on the support surface 401. The first joining tool 40 comprises a sonotrode 42 and a transducer 43, e.g., an ultrasonic transducer, coupled to the sonotrode 42 and configured to vibrate/oscillate the sonotrode 42. The first joining partner 10 may be arranged on the support surface 401 first. Subsequently, a second joining partner 20 may be arranged on the first joining partner 10 such that the first joining partner 10 is arranged between the second joining partner 20 and the first support surface 401. The transducer 43 causes the sonotrode 42 to vibrate/oscillate at an ultrasonic frequency. The ultrasonic frequency may be between 15kHz and 79kHz, for example. In Figure 1, a double arrow schematically illustrates the oscillation. The transducer 43 is mechanically coupled to the sonotrode 42 so that the transducer 43 introduces an ultrasonic amplitude to the sonotrode 42. The transducer 43 is configured to stimulate the sonotrode 42 at a resonance frequency.

During a joining operation of the joining arrangement, i.e. when the joining arrangement is forming a connection (e.g., welded or bonded) between a first joining partner 10 and a second joining partner 20, the first joining partner 10 is (directly or indirectly) placed adjacent (on or below) and, optionally, fixed (e.g. clamped, sucked, adhered, etc.) to the support surface 401 of the second joining tool 41. The second joining partner 20 (i.e. at least a section of the second joining partner 20) is arranged adjacent to the first joining partner 10 such that the first joining partner 10 is arranged between the second joining partner 20 and the support surface 401. The first joining tool 40 (i.e. the sonotrode 42) is moved towards the first joining partner 10, thereby pressing the second joining partner 20 that is arranged between the sonotrode 42 and the first joining partner 10 against the first joining partner 10 with a pressing force Fi. Thereby, the second joining partner 20 physically contacts the first joining partner 10. According to one example, the first joining partner 10 may be a semiconductor substrate or a printed circuit board, and the second joining partner 20 may be a contact pin or any kind of connection element that allows to electrically contact the substrate or circuit board. However, any other types of joining partners 10, 20 may be arranged on the second joining tool 41 and may be permanently connected to each other by performing an ultrasonic joining operation. First and second joining partners 10, 20 may comprise any kind of metallic or hard or soft (thermo)plastic materials, for example. It is possible to form connections between two or more first joining partners 10 and a single second joining partner 20, or between two or more second joining partners 20 and a single first joining partner 10, for example.

With the first pressing force Fi applied, the ultrasonic transducer 43 starts vibrating/oscillating, e.g., around a vertical axis y or in the lateral direction x, depending on the kind of sonotrode that is used, at an ultrasonic frequency fi and forces the sonotrode 42 to also oscillate at a resonance frequency, e.g., around the vertical axis y or in the lateral direction x. In this way, energy is transferred into the interface region between the first and the second joining partner 10, 20, and a tight connection between the first and the second joining partner 10, 20 is formed. If the first and the second joining partner 10, 20 are both electrically conductive, an electrical connection between the first and the second bonding partner 10, 20 may also be formed.

Figure 1 illustrates only one possible example of how a first joining tool 40 may be implemented. Other kinds of joining arrangements are generally known such as, e.g., linear sonotrodes, bending sonotrodes (also referred to as linear bending welding sonotrodes), torsional welding sonotrodes, or flexural resonators. The sonotrode 42 may oscillate around a vertical axis y, as is illustrated in Figure 1. Other sonotrodes are known which, e.g., oscillate in a horizontal direction x (e.g., linear welding). Oscillation of the sonotrode 42 in any other suitable directions or around any other suitable axes is also possible. In the examples which will be described in the following, an oscillation in the horizontal direction x is assumed. The general principles however are clearly not limited to an oscillation of the sonotrode in the horizontal direction x and can also be implemented for sonotrodes oscillating in any other directions.

For many applications, a plurality of joining operations is performed in direct succession. When a substrate for a semiconductor module arrangement is equipped, for example, a plurality of elements (e.g., contact pins, terminal elements, conductor rails, or any other kind of electrical connection elements) is attached to the substrate successively. That is, a second joining partner 20 (e.g., contact pins, terminal elements, conductor rails, or any other kind of electrical connection elements) is connected to a first joining partner 10 (e.g., substrate) during a joining operation, the first joining tool 40 then moves to another second joining partner 20 arranged on the first joining partner 10 and forms another connection during a subsequent joining operation, and so on. In this way, a plurality of joining operations may be performed on the first joining partner 10.

Generally, it is required to create reliable mechanical and electrical connections between two (or more) joining partners. In this respect, it is generally essential that the second joining partners be exactly positioned in their desired positions on the first joining partner. Positioning tools that are used to position second joining partners on a first joining partner generally require a significant amount of space before and possibly also during the joining process which is performed by means of a joining tool. When a plurality of second joining partners is connected to the same first joining partner simultaneously or successively, there may not be much space for the positioning tools as well as for the joining tools to operate.

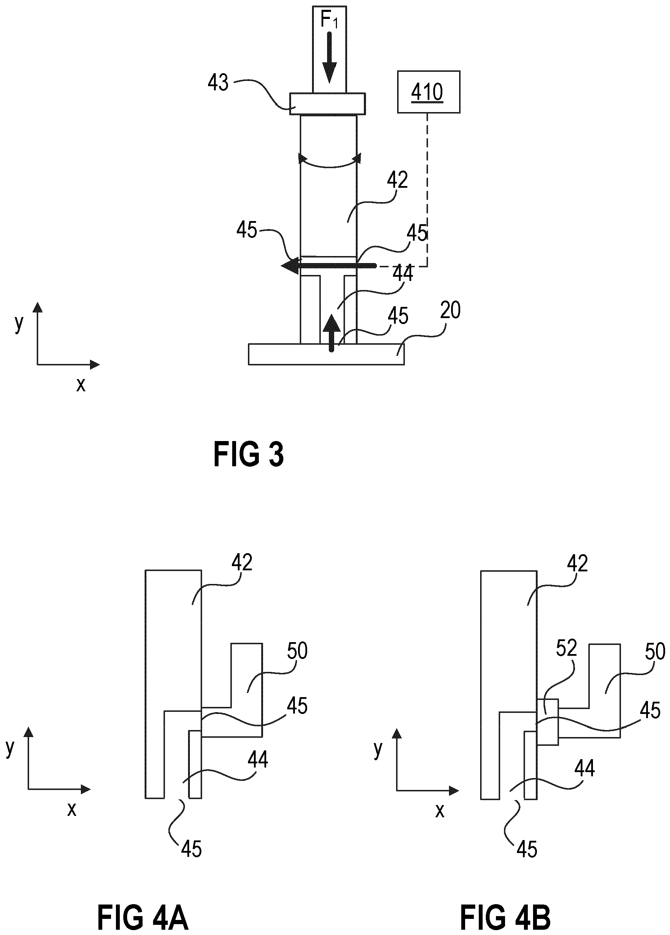

Now referring to Figures 2 and 3, ultrasonic joining arrangements according to embodiments of the disclosure are schematically illustrated. An ultrasonic joining arrangement comprises a first joining tool 40, the first joining tool 40 comprising a sonotrode 42, a transducer 43, and a suction device 410, wherein the transducer 43 is coupled to the sonotrode 42 and configured to vibrate/oscillate the sonotrode 42, the sonotrode 42 comprises a channel 44 extending through the inside of the sonotrode 42, and having at least two openings 45 towards the outside of the sonotrode 42, and the suction device 410 is coupled to a first one of the at least two openings 45 and is configured to suck a second joining partner 20 towards a second one of the at least two openings 45.

Figures 2A and 2B schematically illustrate embodiments wherein the channel 44 comprises (exactly) two openings 45, whereas Figure 3 schematically illustrates an embodiment wherein the channel 44 comprises (exactly) three openings 45. In the embodiments illustrated in Figures 2A and 2B, the suction device 410 may comprise a vacuum pump, whereas the suction device 410 in the embodiment of Figure 3 may instead comprise a compressed air supply. The different embodiments will be described in more detail further below.

Generally, the first joining tool 40 may be configured to pick up a second joining partner 20 by sucking it towards a second one of the at least two openings 45, to place the second joining partner 20 on a first joining partner 10 arranged on the first support surface 401 of a second joining tool 41, and to perform an ultrasonic joining operation by vibrating/oscillating the sonotrode 42 to connect the second joining partner 20 to the first joining partner 10. That is, the first joining tool 40 combines the functions of a positioning tool and the functions of a joining tool in a single arrangement. The second joining partner 20 that is to be connected to the first joining partner 10 is sucked towards the tip of the sonotrode 42, wherein the tip of the sonotrode 42 is an end of the sonotrode 42 that, during a joining operation, faces towards and contacts the stack formed by the second joining partner 20 and the first joining partner 10 (and any additional joining partners included in the stack). In order to be able to suck the second joining partner 20 towards the tip of the sonotrode 42, the second one of the at least two openings 45 may be arranged at the tip of the sonotrode 42, as is schematically illustrated in Figures 2A, 2B and 3. The first one of the at least two openings 45 to which the suction device 410 is connected, may be arranged at any suitable position along the sonotrode 42.

As is schematically illustrated in Figure 2A, the channel 44 may comprise a first section extending through the sonotrode 42 in a vertical direction y (e.g., along the length of the sonotrode 42 between the tip and a second end of the sonotrode 42 opposite the tip). The channel 44 may further comprise a second section extending through the sonotrode 42 in a horizontal direction x. In the example illustrated in Figure 2A, the first section and the second section of the channel 44 are arranged perpendicular to each other. This, however, is only an example. The second section, for example, does not necessarily have to extend along a horizontal plane that is parallel to the support surface 401 of the second joining tool 41 when the sonotrode 42 presses the second joining partner 20 on the first joining partner 10. The second section instead may also extend diagonally from the first section towards the outside of the sonotrode 42, for example. The channel 44 generally may have any suitable form, length and cross-section.

In the example illustrated in Figure 2B, the channel 44 only comprises a single section extending vertically through the sonotrode 42 from the tip of the sonotrode 42 along the entire length of the sonotrode 42 to the second end of the sonotrode 42 opposite the tip. Irrespective of the length, form, and cross-section of the channel 44, the vacuum pump may suck air through the channel 44 from the second opening 45 towards the first opening 45. This is schematically illustrated by means of arrows in Figures 2A and 2B.

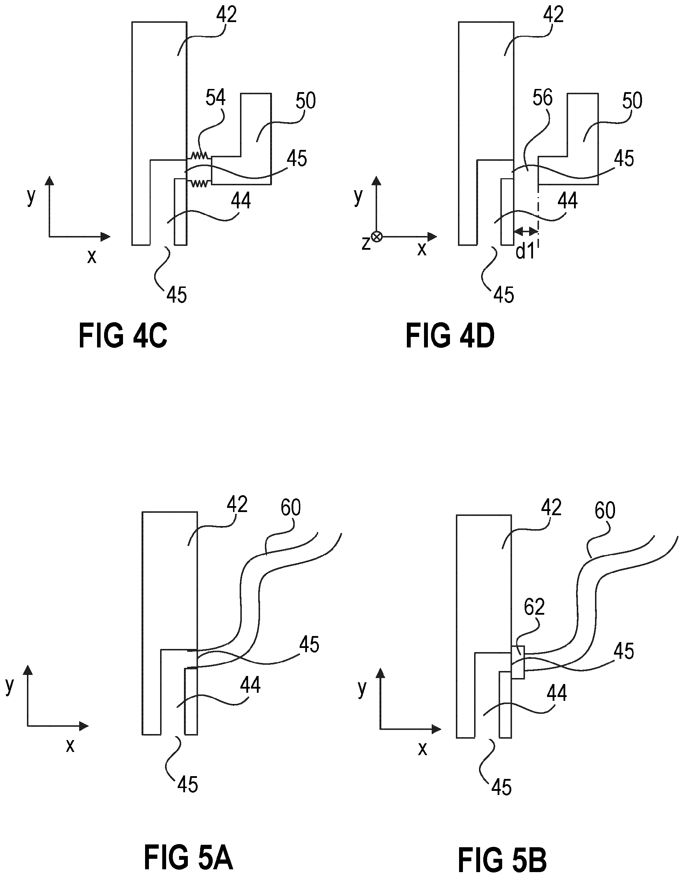

A vacuum pump may be coupled to the respective opening 45 of the channel 44 by means of a vacuum connector 50, for example, as is schematically illustrated in Figures 4A, 4B, 4C and 4D. In the example illustrated in Figure 4A, a vacuum connector 50 is pressed against and directly adjoins the sonotrode 42. In particular, the vacuum connector 50 may be pressed against a section of the sonotrode 42 in which the first opening 45 of the channel 44 is formed. In this way, the vacuum pump (not specifically illustrated in Figure 4A) is able to suck air through the channel 44 and through the vacuum connector 50 in order to suck the second joining partner 20 towards the sonotrode 42. The vacuum connector 50 may have a channel formed therein (not specifically illustrated), which forms a continuous channel together with the channel 44 through the sonotrode 42. As has been described above, the sonotrode 42 vibrates/oscillates while a joining operation is being performed. Further, vacuum connectors 50 are usually comparably stiff elements formed from a comparably hard material. The vacuum connector 50, when being pressed directly against the sonotrode 42 may not be able to deform and/or follow the movements of the sonotrode 42 during the joining operations.

Therefore, in an alternative embodiment, the vacuum connector 50 may be coupled to the sonotrode 42 by means of a flexible adapter element 52. A flexible adapter element 52 is very schematically illustrated in Figure 4B. The flexible adapter element 52 may be implemented in any suitable way in order to be able to deform while the sonotrode 42 vibrates during a joining operation. When using a flexible adapter element 52, the vacuum connector 50 may remain essentially static even when the sonotrode 42 vibrates/oscillates. The flexible adapter 52 may be compressed / uncompressed when the sonotrode 42 vibrates/oscillates, thereby essentially preventing the vibrations/oscillations of the sonotrode 42 to be transferred to the vacuum connector 50. Now referring to Figure 4C, one example of a flexible adapter element is schematically illustrated. According to this example, the flexible adapter element 52 is or comprises a bag bellow 54 (often also referred to as gaiter or boot). Bag bellows are elastic, pleated tubes that may be folded/unfolded in an accordion-like way. Bag bellows may be formed of plastic materials, for example. Any other materials, however, are generally also possible. The flexible adapter element 52, instead of as a bag bellow 54, may also be implemented in any other suitable way in order to be able to seal a passage between the channel 44 and the vacuum connector 50 while preventing the vibrations of the sonotrode 42 from being fully transmitted to the vacuum connector 50.

According to another example, the vacuum connector 50 may not be coupled to the sonotrode 42 at all. A connection between the vacuum connector 50 and the sonotrode 42 may be implemented by means of a so-called gap seal, or gap-type seal. This is schematically illustrated in Figure 4D. The vacuum connector 50 is arranged at a first distance d1 from the sonotrode 42. The first distance d1 may be constant when the sonotrode 42 does not vibrate, and may vary when the sonotrode 42 oscillates. The first distance d1 between the vacuum connector 50 and the sonotrode 42 in its resting position (no oscillation performed) may be larger than a maximum deviation of the sonotrode 42 from its resting position when it oscillates. In this way, the sonotrode 42 is prevented from hitting the vacuum connector 50 even when the sonotrode 42 oscillates. The first distance d1, however, is comparably small such that an amount of air leaking through a gap 56 between the vacuum connector 50 and the sonotrode 42 is negligible. For example, the first distance d1, when the sonotrode 42 is in its resting position, may be between 50µm and 200µm, or between 75µm and 125µm. A maximum ultrasonic amplitude of the sonotrode 42 may be 50µm, for example. That is, even when the sonotrode 42 oscillates towards the vacuum connector 50, the first distance d1 is always greater than zero. In the example illustrated in Figure 4D, the vacuum connector 50 is arranged in a direction x in which the sonotrode 42 oscillates. This, however, is only an example. It is also possible to arrange the vacuum connector 50 in a direction z perpendicular to the direction x in which the sonotrode 42 oscillates. That is, the sonotrode 42 may not oscillate towards the vacuum connector 50 and the first distance d1 between the vacuum connector 50 and the sonotrode 42 may remain essentially constant even when the sonotrode 42 oscillates. In this case, the constant first distance d1 may be between 10µm and 100µm, for example. That is, the first distance d1, even when the sonotrode 42 vibrates, is always greater than zero.

According to another example, the vacuum pump may be coupled to the respective opening 45 of the channel 44 by means of a flexible tube 60. This is schematically illustrated in Figures 5A and 5B. Referring to Figure 5A, the tube 60 may be directly coupled to the channel 44 by inserting one end of the tube 60 into the respective opening 45 of the channel 44. A second end of the tube 60 may be coupled to the vacuum pump. As the sonotrode 42 vibrates/oscillates during the joining operations, however, the tube 60 may unintentionally slip out of the channel 44. Therefore, in order to provide a more stable connection between the tube 60 and the channel 44, the tube 60 may be coupled to the channel 44 by means of an adapter element 62, as is schematically illustrated in Figure 5B. The tube 60 may be a silicone tube, for example. The adapter element 62 may be or comprise a screw-to-stub adapter, for example.

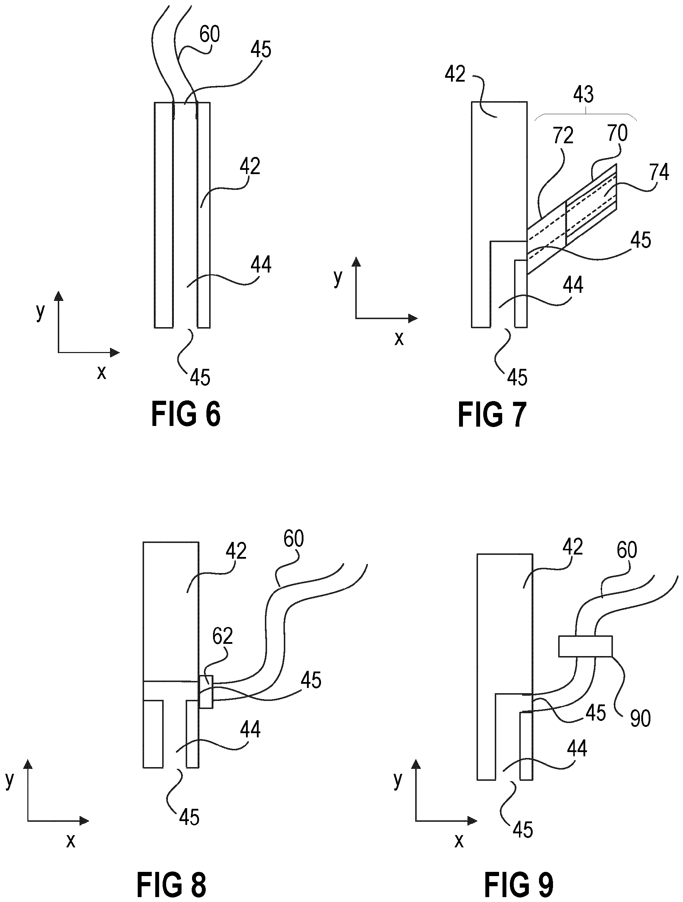

Now referring to Figure 6, a sonotrode 42 with a channel 44 extending from the tip all the way to an opposite end of the sonotrode 42 is schematically illustrated. Similar to the arrangements illustrated in Figures 5A and 5B, the vacuum pump may be coupled to the channel 44 by means of a tube 60, for example. What has been said with respect to the tube 60 and a connection between the tube 60 and the sonotrode 42 above, similarly applies to the arrangement of Figure 6. An adapter element 62, as has been described with respect to Figure 5B, is not specifically illustrated in Figure 6, but, according to embodiments of the disclosure, may be used to form a connection between the tube 60 and the channel 44. The vacuum connector as has been described with respect to Figures 4A - 4C may also be used in connection with the arrangement illustrated in Figure 6.

In the arrangements illustrated in Figures 1, 2 and 3, the transducer 43 is coupled to a second end of the sonotrode 42 opposite the tip. This, however, is only an example. The transducer 43 generally may be coupled to the sonotrode 42 in any other position along the length of the sonotrode 42 between the tip and the second end of the sonotrode 42. This is schematically illustrated in Figure 7. In this example, a channel 74 is provided in the transducer 43. The transducer 43 may comprise a stack of piezo-discs 70, for example. The stack of piezo-discs 70 may be coupled to the sonotrode 42, e.g., by means of a suitable connecting element 72, such that the channel 44 through the sonotrode 42 and the channel 74 through the connecting element 72 and the stack of piezo-discs 70 form a continuous channel. A vacuum pump may be coupled to the stack of piezo-discs 70 and may suck air through the continuous channel through the sonotrode 42, the connecting element 72, and the stack of piezo-discs 70. The connecting element 72 may be a passive element and may comprise or consist of steel, aluminum, tungsten carbide (WC), or any other suitable material.

Using a vacuum pump to suck the second joining partner 20 towards the sonotrode 42, however, is only an example. According to another example, the channel 44 may comprise a second section, extending essentially vertically through part of the sonotrode 42, and a first section extending essentially horizontally through the sonotrode 42. The first section may extend from the first opening 45 to a third opening, and the second section may extend from the second opening 45 to the first section, thereby forming a T junction with the first section. The suction device 410 may comprise a compressed air supply configured to shoot compressed air through the first section of the channel 44 from the first opening 45 to the third opening, thereby sucking air into the second section of the channel 44 extending from the second opening 45 towards the first section (Venturi effect). Similar to what has been described with respect to Figures 5A and 5B above, the compressed air supply may be coupled to the channel 44 by means of a tube 60 and, optionally, an adapter element 62. A compressed air supply, however, can also be coupled to the first opening 45 of the channel 44 in any other suitable way.

When air is sucked through the channel 44 while performing a joining operation, particles or contaminations caused to come loose during the joining operation (e.g., due to friction between the sonotrode 42 and the second joining partner 20, or between the second joining partner 20 and the first joining partner 10) may be sucked through the channel 44 as well. In this way, such particles or contaminations may be prevented from contaminating the first and second joining partners 10, 20. In order to prevent such particles or contaminations from contaminating and possibly harming the suction device 410, a filter 90 may be arranged between the channel 44 and the suction device 410. This is schematically illustrated in Figure 9. That is, a filter 90 may be arranged anywhere along, e.g., a tube 60 or a vacuum connector 50. In this way, air that is sucked through the tube 60 or vacuum connector 50 passes the filter 90 and particles or contaminations are filtered out of the air flow before the air flow reaches the suction device 410.

During each intermediate time interval between two directly successive joining operations, the first joining tool 40 may be moved to the next second joining partner 20 that is to be connected to the first joining partner 10. For example, the sonotrode 42 may be moved to pick up the next second joining partner 20, and may then move to the respective position on the first joining partner 10 in which the respective second joining partner 20 is to be mounted on the first joining partner 10. It, is, however, also possible that the first joining tool 40 remains static and instead the second joining tool 41, with the first joining partner 10 arranged thereon is repositioned after each joining operation. That is, in some embodiments the sonotrode 42 may only be moved in a vertical direction y towards the first joining partner 10 in order to place the second joining partner 20 on and connect the second joining partner 20 to the first joining partner 10, and may be moved away from the first joining partner 10 in the vertical direction y after a joining operation has been completed. Generally speaking, the first joining tool 40 and/or the second joining tool 41 may be movable vertically and/or horizontally. During the intermediate time intervals between two successive joining operations no pressing force is applied by the first joining tool 40. The first joining tool 40 may or may not vibrate/oscillate during the intermediate time intervals. The first joining tool 40, however, may not oscillate at least when picking up a second joining partner 20 and when positioning the second joining partner 20 on the first joining partner 10. In other words, the first joining tool 40 may be practically inactive (may not oscillate or vibrate) at least partly during the intermediate time intervals. "Practically inactive" in this context means that no joining operation is performed. However, the first joining tool 40 may still oscillate during sub-intervals of the intermediate time intervals, e.g., the first joining tool 40 may oscillate when moving away from the first joining partner 10 in order to clean the first joining tool 40. Due to the oscillations, any contaminants may be cast off from the first joining tool 40.

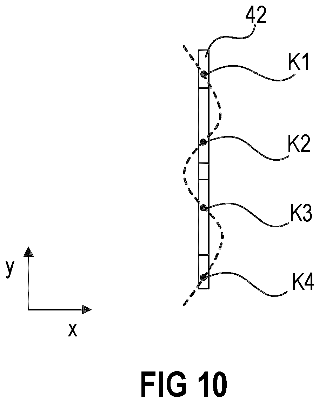

Again referring to Figures 2-9, the first opening 45 and the optional third opening 45 may generally be arranged at any position along the length of the sonotrode 42. The influence of the channel 44 on the mechanical properties of the sonotrode 42 may generally be neglected, especially if the channel 44 is arranged centrally in a vertical direction y of the sonotrode 42. The first opening 45 and the optional third opening 45, however, may reduce the mechanical stability of the sonotrode 42 to a certain degree. The openings 45, therefore, may constitute weak spots along the length of the sonotrode 42. There may be an increased risk of fractions forming in the sonotrode 42 in the areas around the openings 45. In order to reduce the risk for such fractions, the openings 45 may be arranged in defined positions along the length of the sonotrode 42. Referring to Figure 10, a mode of vibration is schematically illustrated in dashed lines. The sonotrode 42 is generally vibrated/oscillated at a defined frequency. That is, the frequency is approximately the same for each of the different joining operations. This results in a constant mode of vibration. Any vibration nodes K1, K2, K3, K4, therefore, form essentially at the same positions along the sonotrode 42 during each of a plurality of joining operations. The frequency and, therefore, the positions of the vibration nodes K1, K2, K3, K4 are known for a specific sonotrode 42. The first opening 45, and the optional third opening 45, may be arranged along the length of the sonotrode 42 at a position of one of the plurality of vibration nodes K1, K2, K3, K4. In this way, the openings are arranged at positions of zero or almost zero deflection, and of zero or almost zero mechanical bending stress (no or only minimal bending of sonotrode 42 in areas of vibration nodes K1, K2, K3, K4). This may significantly reduce the risk of fractions forming in the sonotrode 42.

In the figures, a sonotrode 42 is only very schematically illustrated. The sonotrode 42 generally may have any suitable form, length and cross-section. The sonotrode 42 may be implemented as a simple pin or may have any other suitable more complex form or shape. The sonotrode 42 may comprise or consist of any suitable material, e.g., any suitable metallic, ceramic or partly ceramic material.

A method for joining at least two joining partners 10, 20 by means of an ultrasonic joining arrangement comprises picking up a second joining partner 20 by sucking it towards the second one of the at least two openings 45, placing the second joining partner 20 on a first joining partner 10 arranged on a support surface 401 of a second joining tool 41, and performing an ultrasonic joining operation by vibrating the sonotrode 42 to connect the second joining partner 20 to the first joining partner 10.

## Claims

1. An ultrasonic joining arrangement comprises a first joining tool (40), the first joining tool (40) comprising:
a sonotrode (42);
a transducer (43); and
a suction device (410), wherein
the transducer (43) is coupled to the sonotrode (42) and configured to vibrate the sonotrode (42),
the sonotrode (42) comprises a channel (44) extending through the inside of the sonotrode (42), and having at least two openings (45) towards the outside of the sonotrode (42),
the suction device (410) is coupled to a first one of the at least two openings (45) and is configured to cause a second joining partner (20) to be sucked towards a second one of the at least two openings (45).

2. The ultrasonic joining arrangement of claim 1, further comprising a second joining tool (41) comprising a support surface (401), wherein the first joining tool (40) is configured to
pick up a second joining partner (20) by sucking it towards the second one of the at least two openings (45),
place the second joining partner (20) on a first joining partner (10) arranged on the first support surface (401) of the second joining tool (41), and
perform an ultrasonic joining operation by vibrating the sonotrode (42) to connect the second joining partner (20) to the first joining partner (10).

3. The ultrasonic joining arrangement of claim 2, wherein performing an ultrasonic joining operation comprises applying pressure to the second joining partner (20) and the first joining partner (10) stacked on top of each other on the support surface (401), thereby pressing the second joining partner (20) against the first joining partner (10), and vibrating the sonotrode (42) to apply high-frequency ultrasonic vibrations to the joining partners (10, 20).

4. The ultrasonic joining arrangement of any of the preceding claims, wherein the suction device (410) comprises a vacuum pump.

5. The ultrasonic joining arrangement of claim 4, wherein the vacuum pump is coupled to the respective first opening (45) by means of a vacuum connector (50).

6. The ultrasonic joining arrangement of claim 5, wherein
the vacuum connector (50) is pressed against and directly adjoins the sonotrode (42), or
the vacuum connector (50) is arranged at a first distance (d1) from the sonotrode (42), wherein the first distance (d1), when the sonotrode (42) vibrates, is always greater than zero.

7. The ultrasonic joining arrangement of claim 5, wherein the vacuum connector (50) is coupled to the sonotrode (42) by means of a flexible adapter element (52).

8. The ultrasonic joining arrangement of claim 7, wherein the flexible adapter element (52) is or comprises a bag bellow (54).

9. The ultrasonic joining arrangement of claim 4, wherein the vacuum pump is coupled to the respective first opening (45) by means of a flexible tube (60).

10. The ultrasonic joining arrangement of claim 9, wherein the tube (60) is directly coupled to the channel (44) by inserting one end of the tube (60) into the respective first opening (45).

11. The ultrasonic joining arrangement of claim 9, wherein the tube (60) is coupled to the channel (44) by means of an adapter element (62).

12. The ultrasonic joining arrangement of any of claims 1 to 3, wherein the suction device (410) comprises a compressed air supply configured to shoot compressed air through a first section of the channel (44) extending from the first opening (45) to a third opening, thereby sucking air into a second section of the channel (44) extending from the second opening (45) towards the first section.

13. The ultrasonic joining arrangement of any of the preceding claims, wherein
the transducer (43) is configured to vibrate the sonotrode (42) with a defined frequency such that, when the sonotrode (42) vibrates, a plurality of vibration nodes (K1, K2, K3, K4) form at defined positions along a length of the sonotrode (42), and
the first opening (45) is arranged along the length of the sonotrode (42) at a position of one of the plurality of vibration nodes (K 1, K2, K3, K4).

14. The ultrasonic joining arrangement of any of claims 1 to 12, wherein the first opening (45) is arranged at a first end of the sonotrode (43), and the second opening (45) is arranged at a second end of the sonotrode (42) opposite the first end.

15. A method for joining at least two joining partners (10, 20) by means of an ultrasonic joining arrangement of any of claims 1 to 14, the method comprising
picking up a second joining partner (20) by sucking it towards the second one of the at least two openings (45),
placing the second joining partner (20) on a first joining partner (10) arranged on a support surface (401) of a second joining tool (41), and
performing an ultrasonic joining operation by vibrating the sonotrode (42) to connect the second joining partner (20) to the first joining partner (10).

## Amended claims

### Amended claims in accordance with Rule 137(2) EPC.

1. An ultrasonic joining arrangement comprises a first joining tool (40), the first joining tool (40) comprising:
a sonotrode (42);
a transducer (43); and
a suction device (410) comprising a vacuum pump, wherein
the transducer (43) is coupled to the sonotrode (42) and configured to vibrate the sonotrode (42),
the sonotrode (42) comprises a channel (44) extending through the inside of the sonotrode (42), and having at least two openings (45) towards the outside of the sonotrode (42),
the suction device (410) is coupled to a first one of the at least two openings (45) and is configured to cause a second joining partner (20) to be sucked towards a second one of the at least two openings (45), and
the vacuum pump is coupled to the respective first opening (45) by means of a vacuum connector (50), wherein
the vacuum connector (50) is either pressed against and directly adjoins the sonotrode (42), or
the vacuum connector (50) is arranged at a first distance (d1) from the sonotrode (42), wherein the first distance (d1), when the sonotrode (42) vibrates, is always greater than zero.

2. The ultrasonic joining arrangement of claim 1, further comprising a second joining tool (41) comprising a support surface (401), wherein the first joining tool (40) is configured to
pick up a second joining partner (20) by sucking it towards the second one of the at least two openings (45),
place the second joining partner (20) on a first joining partner (10) arranged on the first support surface (401) of the second joining tool (41), and
perform an ultrasonic joining operation by vibrating the sonotrode (42) to connect the second joining partner (20) to the first joining partner (10).

3. The ultrasonic joining arrangement of any of claims 1 to 2, wherein the suction device (410) comprises a compressed air supply configured to shoot compressed air through a first section of the channel (44) extending from the first opening (45) to a third opening, thereby sucking air into a second section of the channel (44) extending from the second opening (45) towards the first section.

4. The ultrasonic joining arrangement of any of the preceding claims, wherein
the transducer (43) is configured to vibrate the sonotrode (42) with a defined frequency such that, when the sonotrode (42) vibrates, a plurality of vibration nodes (K1, K2, K3, K4) form at defined positions along a length of the sonotrode (42), and
the first opening (45) is arranged along the length of the sonotrode (42) at a position of one of the plurality of vibration nodes (K1, K2, K3, K4).

5. The ultrasonic joining arrangement of any of claims 1 to 3, wherein the first opening (45) is arranged at a first end of the sonotrode (43), and the second opening (45) is arranged at a second end of the sonotrode (42) opposite the first end.

6. A method for joining at least two joining partners (10, 20) by means of an ultrasonic joining arrangement of any of claims 1 to 5, the method comprising
picking up a second joining partner (20) by sucking it towards the second one of the at least two openings (45),
placing the second joining partner (20) on a first joining partner (10) arranged on a support surface (401) of a second joining tool (41), and
performing an ultrasonic joining operation by vibrating the sonotrode (42) to connect the second joining partner (20) to the first joining partner (10).

7. The method of claim 6, wherein performing an ultrasonic joining operation comprises applying pressure to the second joining partner (20) and the first joining partner (10) stacked on top of each other on the support surface (401), thereby pressing the second joining partner (20) against the first joining partner (10), and vibrating the sonotrode (42) to apply high-frequency ultrasonic vibrations to the joining partners (10, 20).
